# EUROPÄISCHE PATENTSCHRIFT

(11) **EP 2 097 589 B1**
(45) Veröffentlichungstag und Bekanntmachung des Hinweises auf die Patenterteilung: **08.10.2014**
(21) Anmeldenummer: 07856279.0
(22) Anmeldetag: 28.11.2007
(51) Int. Cl.: E03C 1/084

(54) **SANITÄRES EINBAUELEMENT**
SANITORY INSTALLATION ELEMENT
ÉLÉMENT D'INSERTION SANITAIRE

(30) Priorität: 06.12.2006 DE 102006057795
(43) Veröffentlichungstag der Anmeldung: 09.09.2009
(73) Patentinhaber: Neoperl GmbH, 79379 Müllheim (DE)
(72) Erfinder: GRETHER, Hermann, 79379 Müllheim (DE); GILCHER, Manfred, 79395 Neuenburg (DE); RUDOLPH, Jörg, 79395 Neuenburg (DE); WEIS, Christoph, 79379 Mühllheim (DE)
(74) Vertreter: Kunst, Manuel Nikolaus Johannes
(86) Internationale Anmeldenummer: PCT/EP2007/010314
(87) Internationale Veröffentlichungsnummer: WO 2008/067936

(56) Entgegenhaltungen:
- DE-A1- 3 642 356
- DE-B3-102004 044 158
- DE-U1- 29 822 353
- US-A- 4 313 564

## Beschreibung

Die Erfindung betrifft ein sanitäres Einbauelement mit zumindest einem By-Pass-Kanal, dem ein Ventil zugeordnet ist, in dessen Offenstellung der zumindest eine By-Pass-Kanal zugeschaltet ist.

Man kennt bereits sanitäre Einbauelemente, die als ein in das Auslaufmundstück einer sanitären Auslaufarmatur einsetzbarer Strahlreglers ausgestaltet sind. Solche Strahlregler, die zur Erzeugung eines homogenen und perlend-weichen Wasserstrahls vorgesehen sind, weisen im Gehäuseinneren ihres Einbaugehäuses einen Strahlzerleger auf, der als ein Diffusor oder als eine Lochplatte ausgestaltet sein kann. Während die Lochplatte eine Vielzahl, jeweils einen Einzelstrahl erzeugender Durchflusslöcher hat, weist der Diffusor eine Prallplatte auf, die von einem durch Durchtrittsöffnungen unterbrochenen Wandungsabschnitt umgrenzt ist. Bei diesen vorbekannten Einbauelementen besteht die Gefahr, dass im Wasser mitgeführte Schmutzpartikel die vergleichsweise kleinen Durchflussquerschnitte der Lochplatte oder des Diffusors verstopfen und somit die Funktion der in den vorbekannten Einbauelementen vorgesehenen Funktionseinheiten beeinträchtigen können.

Man hat daher auch bereits ein selbstreinigendes und als Strahlregler ausgestaltetes sanitäres Einbauelement geschaffen (vgl. US-A-4 313 564). Dieses vorbekannte Einbauelement weist ein in seiner Offenstellung vorgespanntes Ventil auf, das sich bei einem vorgebbaren Staudruck des Wassers in seine Schließstellung bewegt. Während das Wasser in der Offenstellung des Ventils nicht nur durch die in Strömungsrichtung oberhalb des Ventils angeordneten Durchströmkanäle fließen kann, sondern auch den unterhalb des Ventils angeordneten By-Pass-Kanal durchströmt, verbleiben in der Schließstellung des Ventils nur die oberhalb des Ventils vorgesehenen Durchströmkanäle. Durch den während der Schließbewegung des Ventils erhöhten Staudruck des Wassers, durch die mit dem reduzierten lichten Durchflussquerschnitt verbundene Geschwindigskeitserhöhung des Wassers sowie durch die geänderte Flüssigkeitsführung wird in der Schließstellung des Ventils eine abrasive Wirkung des Wassers erreicht, die eventuelle Ablagerungen im vorbekannten Einbauelement zu lösen und zu entfernen vermag. Die in Abhängigkeit vom Staudruck geänderten Flüssigkeitsführungen sowie die währenddessen geänderten Fließgeschwindigkeiten bewirken gleichzeitig aber auch sprunghaft wechselnde Strömungseigenschaften des austretenden Wassers, die vom Verbraucher störend empfunden werden.

Aus der DE 10 2004 044 158 B3 ist bereits ein sanitäres Einbauelement bekannt, das in das Auslaufmundstück einer sanitären Wasserauslaufarmatur einsetzbar ist. Das vorbekannte Einbauelement ist als Strahlreglereinsatz ausgestaltet, der zwischen einem kraftvollen Reinigungsstrahl und einem weichen belüfteten Gesamtstrahl umschaltbar ist. Der vorbekannte Strahlreglereinsatz hat dazu einen zentralen Reinigungsstrahlkanal, den eine ringförmige Strömungskammer mit einer Vielzahl von Wasseraustrittsdüsen umgibt. Die zur Erzeugung des weichen belüfteten Gesamtstrahles vorgesehene Strömungskammer weist eine Einströmöffnung auf, die mit einem in seine Schließstellung vorgespannten Ventil derart steuerbar ist, dass vom anströmenden Wasser das Ventil von einem vorgebbaren Staudruck des Wassers öffenbar ist. Während der Reinigungsstrahl beispielsweise zum Reinigen eines Rasierers vorteilhaft eingesetzt werden kann, wird bei infolge des Wasserdrucks geöffnetem Ventil zusätzlich zum Reinigungsstrahl ein aus einer Vielzahl von Einzelstrahlen zusammengesetzter Softstrahl erzeugt. Da auch der sogenannte Softstrahl den kraftvollen Reinigungsstrahl beinhaltet, ergibt sich auch bei einem entsprechenden Wasserdruck stets ein vergleichsweise unkomfortabel empfundener und mittig spritzender Gesamtstrahl. Der Reinigungsstrahl des vorbekannten Strahlreglers ist zudem nur für externe Reinigungszwecke -, nicht aber zur Selbstreinigung des Strahlreglers zum Zwecke der Aufrechterhaltung seiner bestimmungsgemäßen Funktionen vorgesehen.

Es besteht daher die Aufgabe, ein sanitäres Einbauelement der eingangs erwähnten Art zu schaffen, dass sich durch die störungsfreie und wartungsarme Funktionsweise der darin befindlichen Funktionseinheiten auszeichnet und unabhängig vom Wasserdruck einen homogenen Wasserstrahl zu formen vermag.

Die erfindungsgemäße Lösung dieser Aufgabe besteht bei dem Einbauelement der eingangs erwähnten Art insbesondere darin, dass das Einbauelement ein Filtersieb mit wenigstens einer Auslassöffnung hat, welche Auslassöffnung einen im Vergleich zu den Filteröffnungen des Filtersiebes vergrößerten lichten Öffnungsquerschnitt aufweist, dass die wenigstens eine Auslassöffnung in den zumindest einen By-Pass-Kanal mündet, und dass die Auslassöffnung in Strömungsrichtung vor und der Kanalauslass des zumindest einen By-Pass-Kanals in Strömungsrichtung hinter mindestens einem flüssigkeitsführenden Bestandteil wenigstens einer im Einbauelement befindlichen Funktionseinheit angeordnet ist.

Das erfindungsgemäße Einbauelement weist ein Filtersieb mit wenigstens einer Auslassöffnung auf, das die im Wasser mitgeführten Schmutzpartikel abfängt und ansammeln kann, um diese über seine Auslassöffnung auszutragen. Um diese Schmutzpartikel von der Zuströmseite des Filtersiebes aus austragen zu können, weist die Auslassöffnung dieses Filtersiebes einen im Vergleich zu den Filteröffnungen des Filtersiebes vergrößerten lichten Öffnungsquerschnitt auf. Die wenigstens eine Auslassöffnung mündet in dem zumindest einen By-Pass-Kanal, durch den die angesammelten Schmutzpartikel abgeführt werden können. Dabei ist die wenigstens eine Auslassöffnung des Filtersiebs in Strömungsrichtung vor und der Kanalauslass des By-Pass-Kanals in Strömungsrichtung hinter mindestens einem flüssigkeitsführenden Bestandteil wenigstens einer im Einbauelement befindlichen Funktionseinheit angeordnet. Das erfindungsgemäße Einbauelement zeichnet sich daher durch eine komfortable Funktionsweise mit gleichbleibenden Strömungsgeschwindigkeiten aus. Da die die Funktionsweise eines wasserführenden Bestandteils eventuell gefährdenden Schmutzpartikel über den By-Pass-Kanal während der Unterbrechung der Wasserzufuhr abgeführt werden können, wird gleichzeitig eine wartungsarme und störungsfreie Funktionsweise des erfindungsgemäßen Einbauelementes sowie der darin befindlichen Funktionseinheiten sichergestellt.

Unabhängig davon, ob das Ventil durch eine Rückstellfeder in seiner Offenstellung gehalten wird oder manuell in seine Offenstellung bewegt werden kann, ist es vorteilhaft, wenn das wenigstens eine Ventil von seiner Offenstellung unter dem Staudruck des zuströmenden Wassers in seine Schließstellung bewegbar ist.

Eine bevorzugte und besonders vorteilhafte Ausführungsform gemäß der Erfindung sieht vor, dass das Einbauelement selbstreinigend ausgestaltet ist und dass dazu das wenigstens eine Ventil unter dem Staudruck des zuströmenden Wassers gegen eine Rückstellkraft in seine Schließstellung bewegbar ist. Bei dieser Ausführungsform wird das Ventil durch die Rückstellkraft grundsätzlich in seiner Offenstellung gehalten. Da das Ventil von seiner Offenstellung unter dem Staudruck des zuströmenden Wassers gegen die Rückstellkraft in seine Schließstellung bewegbar ist, wird das Ventil vom zuströmenden Wasser in seiner Schließstellung gehalten, um erst mit der Unterbrechung des Wasserstroms unter Schließen der Auslaufarmatur derart zu öffnen, dass die angesammelten Schmutzpartikel abgeführt werden können. Somit können die die Funktionsweise eines wasserführenden Bestandteils gefährdenden Schmutzpartikel über den By-Pass-Kanal während der Unterbrechung der Wasserzufuhr abgeführt werden, was regelmäßig beim Schließen der den Wasserstrom steuernden Auslaufarmatur erfolgt.

Eine bevorzugte Ausführungsform gemäß der Erfindung sieht vor, dass das Einbauelement einen Strahlregler als Funktionseinheit aufweist und dass ein Strahlzerleger als zumindest eines der flüssigkeitsführenden Bestandteile vorgesehen ist. Da gerade der Strahlzerleger eines Strahlreglers mit seinen vergleichsweise kleinen Durchflussquerschnitten durch im Wasser mitgeführte Schmutzpartikel gefährdet ist, ist das erfindungsgemäße Einbauelement mit seinen selbstreinigenden Eigenschaften gerade in Verbindung mit einem Strahlregler vorteilhaft einsetzbar.

Dabei kann der Strahlzerleger als Lochplatte oder als Diffusor ausgestaltet sein.

Um eine störungsfreie Funktion der im erfindungsgemäßen Einbauelement befindlichen Funktionseinheiten zu begünstigen, ist es vorteilhaft, wenn zumindest ein Teil der Filteröffnungen des Filtersiebs einen im Vergleich zu den Durchflussöffnungen des zumindest einen flüssigkeitsführenden Bestandteils gleich großen oder kleineren lichten Durchflussquerschnitt aufweisen. Auf diese Weise wird sichergestellt, dass solche Schmutzpartikel, die eventuell die Filteröffnungen des Filtersiebs passiert haben, erst Recht auch durch die Durchflussöffnungen des Strahlzerlegers hindurchtreten können.

Während die im Wasser mitgeführten Schmutzpartikel zumindest zu einem überwiegenden Teil durch den By-Pass-Kanal abgeführt werden, ist es vorteilhaft, wenn die zumindest eine Funktionseinheit den Filteröffnungen des Filtersiebes in Strömungsrichtung nachgeschaltet ist. Somit wird der durch die Filteröffnungen des Filtersiebes gereinigte Wasserstrahl stets der zumindest einen Funktionseinheit zugeführt.

Eine bevorzugte Ausführungsform gemäß der Erfindung sieht vor, dass zumindest ein Ventil einen ventilkörper hat, der im Einbauelement gegen eine Rückstellkraft verschieblich geführt ist.

Dabei sieht eine besonders vorteilhafte Weiterbildung gemäß der Erfindung vor, dass ein durch das Einbauelement hindurchgeführter Teilbereich des Ventilkörpers zumindest bis etwa zum Wasserauslass des Einbauelementes vorsteht und als Handhabe zum manuellen Betätigen des Ventils ausgestaltet ist. Der über den Wasserauslass des Einbauelements vorstehende Teilbereich des Ventilkörpers lässt nicht nur die jeweilige Betriebsstellung des Ventils erkennen, vielmehr kann der Anwender bei Bedarf über die automatische Selbstreinigung des erfindungsgemäßen Einbauelementes hinaus auch weitere Selbstreinigungsvorgänge auslösen, wenn er den Ventilkörper an dem als Handhabe ausgestalteten Teilbereich bei Bedarf in seine Offenstellung bewegt.

Besonders vorteilhaft ist es, wenn der Ventilkörper pilz- oder tellerförmig ausgestaltet ist.

Eine bevorzugte Ausführungsform gemäß der Erfindung sieht vor, dass der Ventilkörper einen im Einbauelement verschieblich geführten Führungszapfen hat.

Dieser Führungszapfen kann massiv ausgestaltet und in entsprechenden Führungsöffnungen des Einbauelementes geführt sein. Eine andere Ausführungsform gemäß der Erfindung sieht vor, dass der Führungszapfen rohrförmig ausgestaltet ist, dass das Rohrinnere des Führungszapfens als By-Pass-Kanal ausgestaltet ist, und dass im zuströmseitigen Endbereich des Führungszapfens zumindest ein Flüssigkeitseinlass und im abströmseitigen Endbereich des Führungszapfens wenigstens ein Flüssigkeitsauslass vorgesehen ist. Somit werden die Schmutzpartikel über das Rohrinnere des rohrförmig ausgestalteten Führungszapfens hindurch am flüssigkeitsführenden Bestandteil der Funktionseinheit vorbeigeführt. Steht der rohrförmige Führungszapfen über den Wasserauslass des erfindungsgemäßen Einbauelementes hervor, werden die Schmutzpartikel unmittelbar nach außen befördert, ohne auch nur eine der Funktionseinheiten beeinträchtigen zu können.

Eine besonders einfache Ausführungsform gemäß der Erfindung sieht vor, dass die abströmseitige und vorzugsweise über das Einbauelement vorstehende Stirnöffnung des Führungszapfens als Flüssigkeitsauslass ausgestaltet ist.

Eine weitere, besonders vorteilhafte Ausführungsform gemäß der Erfindung sieht vor, dass der Ventilkörper zumindest in einem schirmförmigen Teilbereich elastisch ausgestaltet ist und außenumfangsseitig eine umlaufende Dichtlippe hat und dass der schirmförmige Teilbereich von einer Offenstellung gegen die Elastizität des elastischen Materials in eine Schließstellung bewegbar ist. Der elastisch ausgestaltete schirmförmige Teilbereich eines solchen Ventilkörpers kann durch den Staudruck des zuströmenden Wassers derart umgestülpt werden, dass sich das Ventil von seiner Offenstellung in seine Schließstellung bewegt. Bei nachlassendem Staudruck des Wassers kann sich der schirmförmige Teilbereich des Ventilkörpers aufgrund der Eigenelastizität des Materials von seiner Schließstellung in die Offenstellung umstülpen. Besonders vorteilhaft ist es, wenn der die Auslassöffnung umgrenzende Randbereich des Filtersiebes als mit dem Ventilkörper zusammenwirkender Ventilsitz ausgestaltet ist.

Um gegebenenfalls auch große Schmutzpartikel im Wasser ausfiltern zu können, ist es vorteilhaft, wenn dem Einbauelement in Strömungsrichtung zumindest ein Vorsatzsieb vorgeschaltet ist. Ein solches Vorsatzsieb bewirkt eine Vorfilterung des zuströmenden Wassers, bevor das Wasser anschließend das Filtersieb passieren kann.

Besonders vorteilhaft ist es, wenn das Einbauelement einen Strahlregler sowie einen vorzugsweise vorgeschalteten Durchflussmengenregler als Funktionseinheiten aufweist.

Eine bevorzugte Ausführungsform gemäß der Erfindung sieht vor, dass das Filtersieb trichterförmig ausgestaltet ist und dass die Trichteröffnung des Filtersiebes als Auslassöffnung dient. Dabei kann das trichterförmige Filtersieb eine im wesentlichen konvexe oder konkave Trichterform haben.

Der Ventilkörper des dem By-Pass-Kanal zugeordneten Ventils kann gegen die Rückstellkraft einer Rückstellfeder von seiner Offenstellung in die Schließstellung bewegt werden. Eine andere, besonders vorteilhafte Ausführungsform gemäß der Erfindung sieht vor, dass der ventilkörper an einem über das Vorsatz- oder Filtersieb vorstehenden Führungszapfen verschieblich geführt ist und dass zumindest ein Rückstellelement aus elastischem Material vorgesehen ist, welches einerseits mit dem Ventilkörper und andererseits mit dem Führungszapfen verbunden ist.

Um den Ventilkörper besonders sicher am Führungszapfen führen zu können, ist es zweckmäßig, wenn der Ventilkörper den Führungszapfen ringförmig umgreift.

Der Ventilkörper einerseits und das ihm zugeordnete Rückstellelement andererseits bilden eine untrennbare Funktionseinheit, wenn das Rückstellelement mit gegenüberliegenden Stirnrändern am Ventilkörper einstückig abgeformt ist und wenn das Rückstellelement mit seinem Mittelbereich auf der zuströmseitigen Stirnseite des Führungszapfens abgestützt ist. Dabei kann das Rückstellelement praktisch federbalg- oder hosenträgerartig am Ventilkörper befestigt sein.

Eine besonders einfache und vorteilhafte Ausführungsform gemäß der Erfindung sieht vor, dass das Rückstellelement den Führungszapfen kappenförmig übergreift und dass das Rückstellelement mit seinem abströmseitigen Umfangsrandbereich einstückig an den Ventilkörper angeformt ist.

Bei einem den Führungszapfen kappenförmig übergreifenden Rückstellelement ist es besonders vorteilhaft, wenn der elastisch nachgiebige Kappenumfang des aus elastischem Material hergestellten Rückstellelementes die Rückstellkraft bewirkt. Eine bevorzugte Ausführungsform gemäß der Erfindung sieht daher vor, dass der Ventilkörper im wesentlichen durch den elastisch nachgiebigen Kappenumfang des Rückstellelementes am Führungszapfen verschieblich geführt ist.

Das mit dem Ventilkörper verbundene Rückstellelement kann aus hartelastischem Material hergestellt werden und/oder auch einen längeren Verstellweg des Ventilkörpers erlauben, wenn das Rückstellelement einen als Federbalg ausgestalteten Kappenumfang hat.

Weitere Merkmale gemäß der Erfindung ergeben sich aus der nachfolgenden Beschreibung erfindungsgemäßer Ausführungsbeispiele sowie den Ansprüchen. Nachstehend wird die Erfindung anhand bevorzugter Ausführungsbeispiele noch näher erläutert.

Es zeigt:
- Fig. 1: ein selbstreinigendes und in das Auslaufmundstück einer sanitären Auslaufarmatur einsetzbares Einbauelement in einem perspektivischen Längsschnitt, wobei sich in dem Einbauelement eine als Strahlregler ausgestaltete Funktionseinheit befindet, die den Filteröffnungen eines Filtersiebes in Strömungsrichtung nachgeschaltet ist, und wobei das Filtersieb auch eine zentrale Auslassöffnung hat, die in einem By-Pass-Kanal mündet, der über ein hier in seiner Schließstellung befindliches Ventil ansteuerbar ist,
- Fig. 2: das Einbauelement aus Figur 1 in der Offenstellung seines, den By-Pass-Kanal ansteuernden Ventils,
- Fig. 3: ein mit Figur 1 und 2 vergleichbares Einbauelement in seiner Schließstellung, das ein Ventil mit einem über das Einbauelement vorstehenden Führungszapfen hat, wobei der vorstehende Endbereich des Führungszapfens als Handhabe zum manuellen Betätigen des Ventils ausgestaltet ist,
- Fig. 4: das Einbauelement aus Figur 3 in der Offenstellung seines Ventils,
- Fig. 5: ein in der Schließstellung seines Ventils dargestelltes Einbauelement, dessen Ventil einen rohrförmigen Ventilkörper hat, wobei in dem Rohrinneren des rohrförmigen Ventilkörpers der By-Pass-Kanal vorgesehen ist,
- Fig. 6: das Einbauelement aus Figur 5 in der Offenstellung seines Ventils,
- Fig. 7: ein in der Schließstellung seines Ventils dargestelltes Einbauelement, das in seinem Einbaugehäuse eine als Strahlregler ausgestaltete und eine als Durchflussmengenregler ausgebildete Funktionseinheit zusammenfasst,
- Fig. 8: das Einbauelement aus Figur 7 in der Offenstellung seines Ventils,
- Fig. 9: ein in der Schließstellung seines Ventils gezeigtes Einbauelement, wobei das Einbauelement einen Strahlregler als Funktionseinheit beinhaltet, welcher Strahlregler einen als Diffusor ausgestalteten Strahlzerleger hat,
- Fig. 10: das Einbauelement aus Figur 9 in der Offenstellung seines Ventils,
- Fig. 11: ein mit Figur 1 und 2 vergleichbar ausgestaltetes selbstreinigendes Einbauelement, dem hier ein Vorsatzsieb in Strömungsrichtung vorgeschaltet ist,
- Fig. 12: das Einbauelement aus Figur 11 in der Offenstellung seines Ventils,
- Fig. 13: ein Einbauelement mit einem in seiner Schließstellung befindlichen Ventil, wobei der schirm- oder pilzförmige Ventilkörper des Ventils aus elastischem Material hergestellt und unter dem Staudruck des zuströmenden Wassers von seiner Offenstellung gegen die Rückstellkraft des elastischen Materials in eine Schließstellung des Ventils bewegbar ist,
- Fig. 14: das Einbauelement aus Figur 13 in der Offenstellung seines Ventils,
- Fig. 15: ein Einbauelement mit einem, in seiner Offenstellung befindlichen Ventil, welches Ventil einen ringförmig ausgebildeten und an einem Führungszapfen verschieblich geführten Ventilkörper hat, wobei an dem Ventilkörper ein kappenförmiges Rückstellelement aus elastischem Material angeformt ist, welches den freien Endbereich des Führungszapfens übergreift,
- Fig. 16: das Einbauelement aus Figur 15 in der Schließstellung seines Ventils,
- Fig. 17: ein mit Figur 15 und 16 vergleichbar ausgebildetes Einbauelement mit einem, in seiner Offenstellung befindlichen Ventil, wobei das Ventil ein kappenförmiges Rückstellelement hat, dessen Kappenumfang federbalgartig ausgestaltet ist,
- Fig. 18: das Einbauelement aus Figur 17 in der Schließstellung seines Ventils,
- Fig. 19: ein mit den Figuren 15 bis 18 vergleichbar ausgebildetes Einbauelement mit einem in seiner Offenstellung befindlichen Ventil, wobei das Ventil einem hülsenförmigen By-Pass-Kanal zuströmseitig vorgeschaltet ist, dessen Kanalauslass auf der Abströmseite des Einbauelements mündet,
- Fig. 20: das Einbauelement aus Figur 19 in der Schließstellung seines Ventils,
- Fig. 21: ein mit Figur 19 und 20 vergleichbares Einbauelement mit einem in seiner Offenstellung befindlichen Ventil, dessen Ventilkörper mit einem kappenförmigen Rückstellelement verbunden ist, welches Rückstellelement as seinem Kappenumfang als Federbalg ausgestaltet ist,
- Fig. 22: das Einbauelement aus Figur 21 in der Schließstellung seines Ventils,
- Fig. 23: ein mit Figur 17 und 18 vergleichbares Einbauelement, wobei das als Strahlregler ausgebildete Einbauelement hier einen als Diffusor ausgestalteten Strahlzerleger hat,
- Fig. 24: das Einbauelement aus Figur 23 in der Schließstellung seines Ventils,
- Fig. 25: ein mit Figur 15 und 16 vergleichbares und in der Offenstellung seines Ventils abgebildetes Einbauelement, das hier ebenfalls einen Diffusor als Strahlzerleger ausweist,
- Fig. 26: das Einbauelement aus Figur 25 in der Schließstellung seines Ventils und
- Fig. 27: die Durchflusskurve der in den Figuren 1 bis 26 gezeigten und als Strahlregler ausgebildeten Einbauelemente (durchgezogene Linie) im Vergleich zur Durchflusskurve eines herkömmlichen und gemäß dem Stand der Technik ausgestalteten Strahlreglers (strichpunktierte Linie).

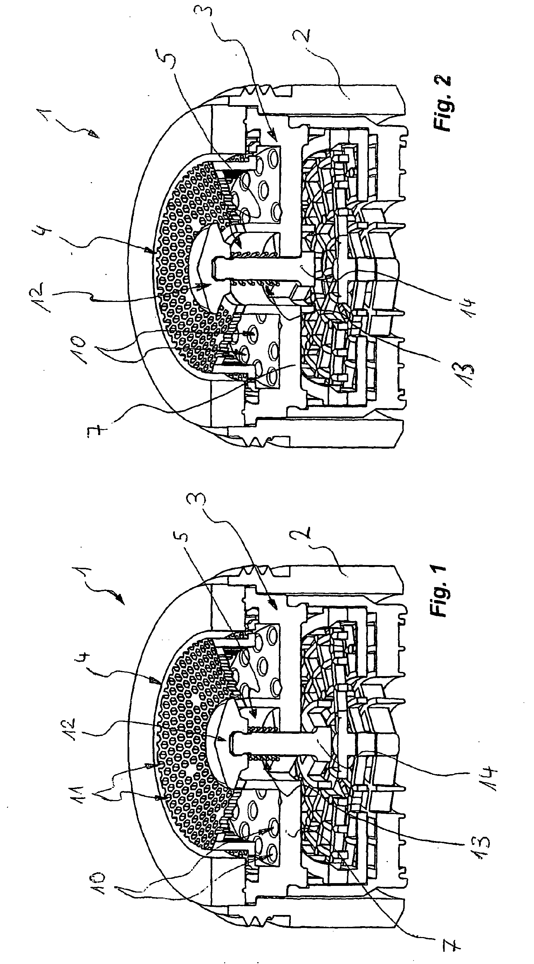

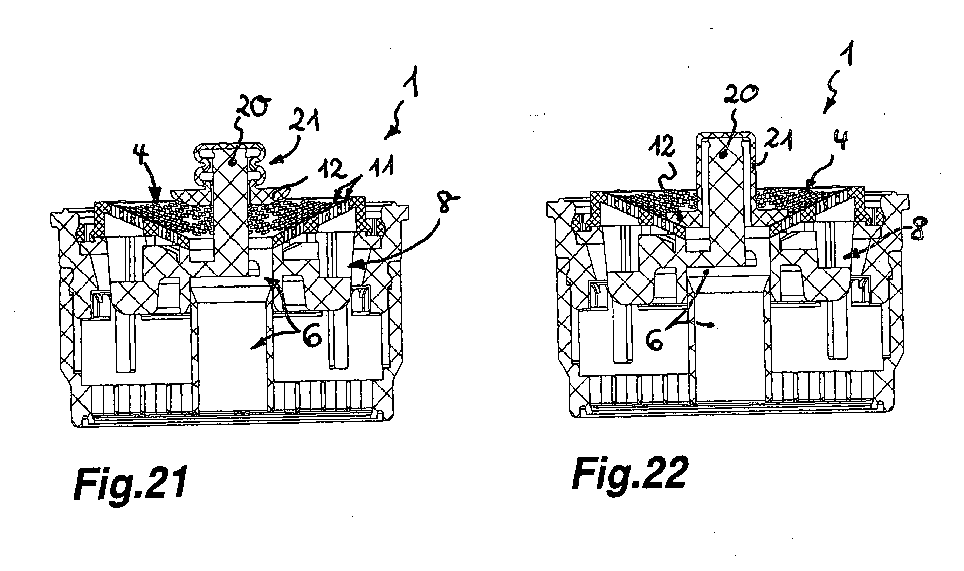

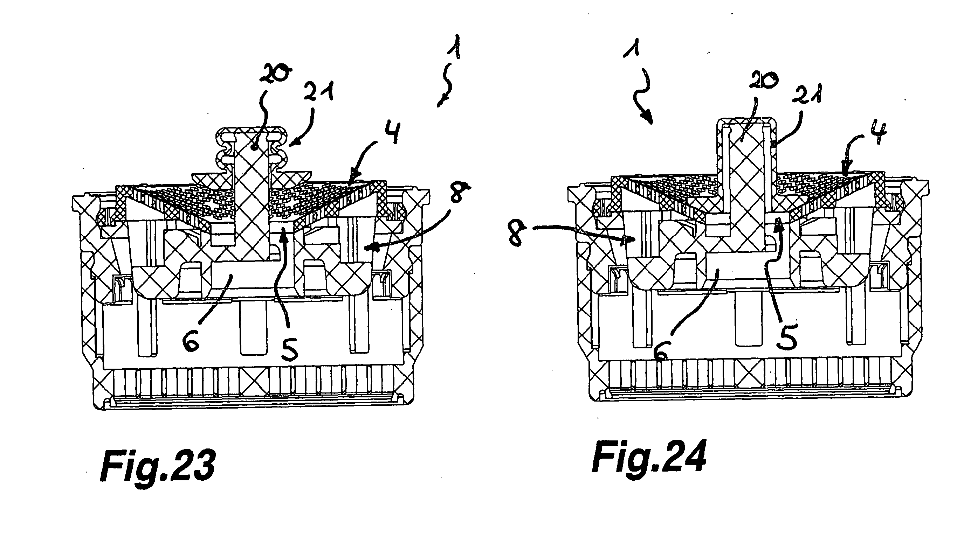

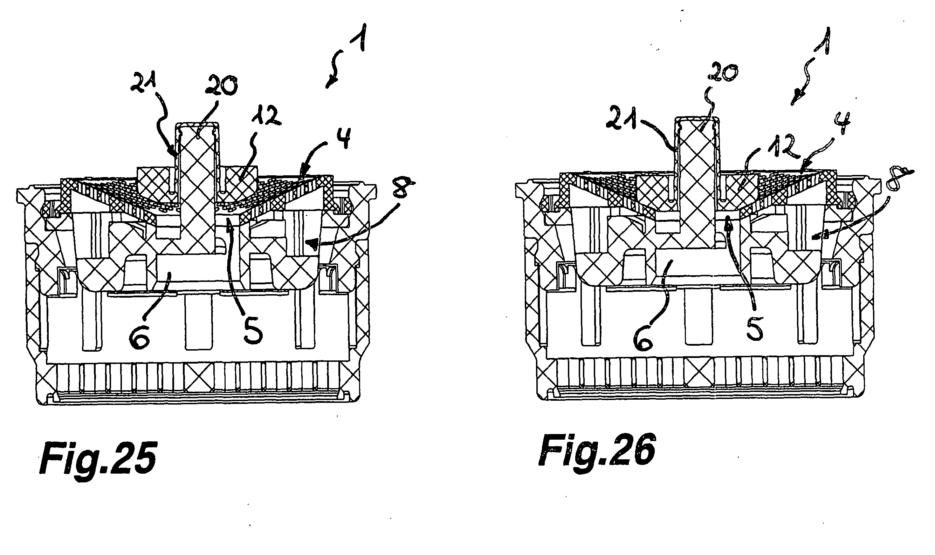

In den Figuren 1 bis 26 sind verschiedene Ausführungen eines selbstreinigenden sanitären Einbauelementes 1 dargestellt. Die hier dargestellten Ausführungen des selbstreinigenden Einbauelementes 1 sind in das Auslaufmundstück 2 einer hier nicht weiter gezeigten sanitären Auslaufarmatur einsetzbar. Jedes der Einbauelemente 1 weist zumindest eine als Strahlregler 3 ausgestaltete Funktionseinheit auf, die zur Bildung eines homogenen oder perlend-weichen, belüfteten oder unbelüfteten, vor allem aber nicht-spritzenden Wasserstrahls dient.

Die in den Figuren 1 bis 26 dargestellten Einbauelemente 1 weisen ein Filtersieb 4 mit einer hier zentral angeordneten Auslassöffnung 5 auf, wobei die Auslassöffnung 5 einen im Vergleich zu den Filteröffnungen des Filtersiebes 4 vergrößerten lichten Öffnungsquerschnitt hat. Die Auslassöffnung 5 des Filtersiebes 4 mündet in einem By-Pass-Kanal 6. Das Filtersieb 4 ist hier trichterförmig ausgestaltet, wobei die Trichteröffnung des Filtersiebes 4 als Auslassöffnung 5 dient. Das trichterförmige Filtersieb 4 weist hier eine im wesentlichen konvexe Trichterform auf, die sich in Durchflussrichtung zunehmend verjüngt. Das trichterförmige Filtersieb 4 vermag somit die im Wasser eventuell mitgeführten Schmutzpartikel wirkungsvoll abzufangen und am Fuße seiner Trichterform im Bereich der Auslassöffnung 5 anzusammeln. Während das die Filteröffnungen des Filtersiebs 4 durchströmende Wasser in gereinigter Form den dem Filtersieb 4 nachfolgenden Funktionseinheiten zugeführt wird, mündet die Auslassöffnung 5 in den By-Pass-Kanal 6, durch den die gesammelten Schmutzpartikel abgeführt werden können. Dabei ist die Auslassöffnung 5 in Strömungsrichtung vor und der Kanalauslass des By-Pass-Kanals 6 in Strömungsrichtung hinter mindestens einem flüssigkeitsführenden Bestandteil wenigstens einer im Einbauelement befindlichen Funktionseinheit angeordnet. Der By-Pass-Kanal 6 ist mit Hilfe eines Ventils ansteuerbar, das im Bereich der Auslassöffnung 5 des Filtersiebs 4 angeordnet ist. Da das Ventil der hier dargestellten Einbauelemente 1 von seiner Offenstellung unter dem Staudruck des zuströmenden Wassers gegen eine Rückstellkraft in seine Schließstellung bewegbar ist, wird das Ventil vom zuströmenden Wasser stets in seiner Schließstellung gehalten, um erst mit der Unterbrechung des Wasserstroms und Schließen der Auslaufarmatur derart zu öffnen, dass die im Bereich der Auslassöffnung 5 angesammelten Schmutzpartikel abgeführt werden können. Das Einbauelement 1 zeichnet sich daher durch eine komfortable Funktionsweise mit gleichbleibenden Strömungseigenschaften aus. Da die die Funktionsweise eines wasserführenden Bestandteils gefährdenden Schmutzpartikel über den By-Pass-Kanal 6 während der Unterbrechung der Wasserzufuhr abgeführt werden können, was regelmäßig beim Schließen der den Wasserstrom steuernden Auslaufarmatur erfolgt, wird gleichzeitig eine wartungsarme und störungsfreie Funktionsweise der hier dargestellten Einbauelemente 1 sowie der darin befindlichen Funktionseinheiten sichergestellt.

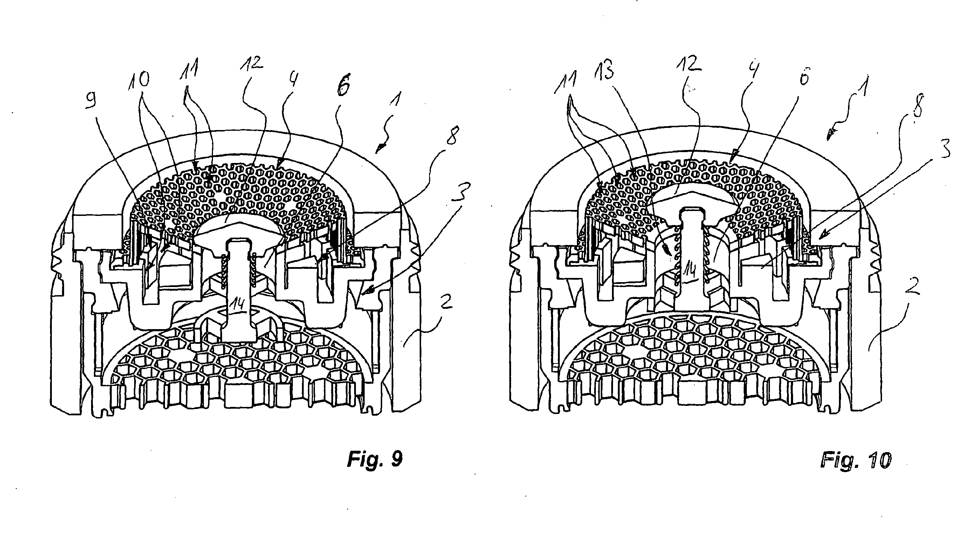

Wie beispielsweise aus einem Vergleich der Figuren 1 und 2 einerseits und der Figuren 9 und 10 andererseits deutlich wird, kann der Strahlzerleger der zumindest einen, als Strahlregler 3 ausgestalteten Funktionseinheit entweder als Lochplatte 7 oder als Diffusor 8 ausgestaltet sein. Während die in Figur 1 und 2 dargestellte und als Strahlzerleger dienende Lochplatte 7 eine Vielzahl von, das zuströmende Wasser in Einzelstrahlen unterteilende Durchtrittsöffnungen 10 hat, weist der ebenfalls als Strahlzerleger vorgesehene Diffusor 8 des in den Figuren 9 und 10 abgebildeten Strahlreglers 3 eine Prallplatte auf, die eine, durch Durchtrittsöffnungen 10 unterbrochene Umfangswandung 9 umgibt. Da der lichte Durchflussquerschnitt der in solchen Strahlzerlegern vorgesehenen Durchtrittslöcher oder Durchtrittsöffnungen 10 vergleichsweise klein ist, besteht die Gefahr, dass die Lochplatte 7 oder der durch Diffusor 8 durch die im Wasser mitgeführten Schmutzpartikel verstopft und die ordnungsgemäße Funktion des Einbauelementes 1 beeinträchtigt wird. Mit Hilfe des By-Pass-Kanals 6 werden Schmutzpartikel, die einen solchen wasserführenden Bestandteil 7, 8 des Strahlreglers 3 beeinträchtigen könnten, von diesem wasserführenden Bestandteil 7, 8 ferngehalten und aus dem Einbauelement 1 abgefiltert.

Dabei weisen die der zumindest einen Funktionseinheit 3 vorgeschalteten Filteröffnungen 11 des Filtersiebs 4 einen im Vergleich zu den Durchtrittsöffnungen 10 des zumindest einen flüssigkeitsführenden Bestandteils 7, 8 allenfalls gleich großen und vorzugsweise kleineren lichten Durchflussquerschnitt auf, so dass solche Schmutzpartikel, welche die Filteröffnungen des Filtersiebes 4 passiert haben, auf jeden Fall auch durch die Durchtrittöffnungen oder Durchtrittslöcher 10 des flüssigkeitsführenden Bestandteils 7, 8 passen.

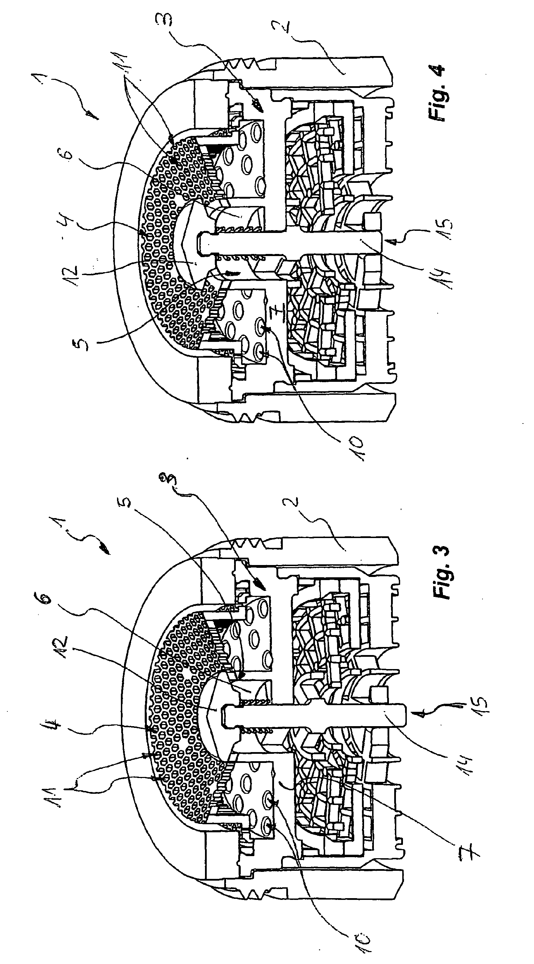

Bei den in Figur 1 bis 12 dargestellten Einbauelementen ist der schirm- oder pilzförmige Ventilkörper 12 des Ventils gegen die Rückstellkraft einer Rückstellfeder 13 verschieblich im Einbauelement 1 geführt. Der Ventilkörper 12 weist dazu einen Führungszapfen 14 auf, der in entsprechenden Führurgsöffnungen des Einbauelements 1 verschieblich geführt ist. Der Ventilkörper 12 kann mit seinem Führungszapfen 14 bis zu den in Strömungsrichtung nachfolgenden Bestandteilen der zumindest einen Funktionseinheit 3 reichen, wie dies beispielsweise in den Figuren 1 und 2 dargestellt ist. Möglich ist aber auch, dass der Ventilkörper 12 mit seinem Führungszapfen 14 durch das Einbauelement 1 hindurchgeführt ist und zumindest bis zum Wasserauslauf des Einbauelements vorsteht, wobei der vorstehende Teilbereich des Ventilkörpers 12 als Handhabe 15 ausgestaltet sein kann. Wie aus den Figuren 3 bis 6 erkennbar ist, lässt der als Handhabe 15 ausgestaltete und über das Einbauelement 1 vorstehende Teilbereich nicht nur die jeweilige Offen- oder Schließstellung des Ventilkörpers 12 erkennen, - vielmehr kann der Anwender das Ventil durch Druckbeaufschlagung des als Handhabe 15 ausgestalteten Teilbereichs des Ventilkörpers 12 bei Bedarf auch manuell in seine Offenstellung bewegen, wenn ihm eine Benutzer-initiierte Reinigung des Einbauelementes 1 notwendig erscheint.

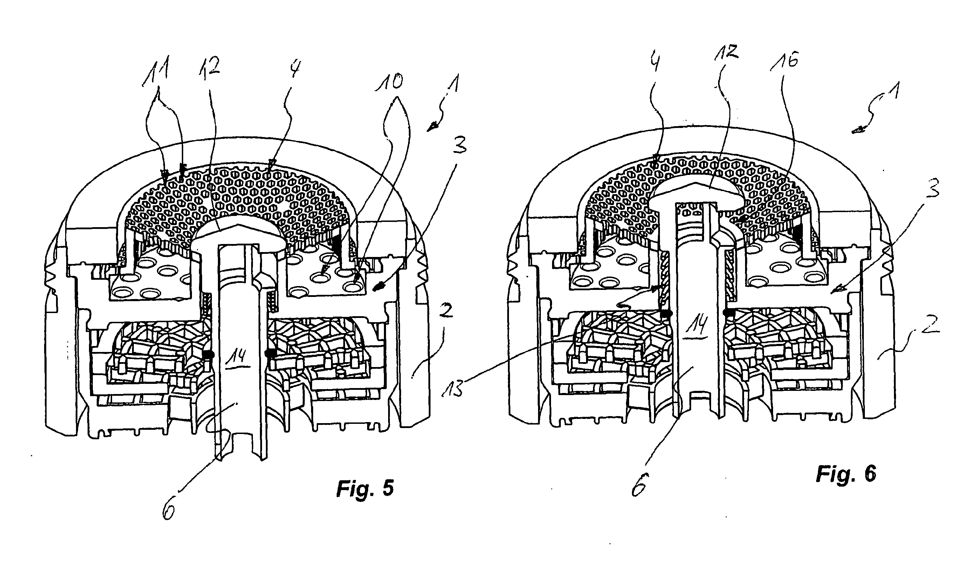

Aus den Fig. 5 und 6 ist erkennbar, dass der bis zum Wasserauslauf des Einbauelements vorstehende und als Handhabe 15 ausgestaltete Teilbereich des Ventilkörpers 12 an seinem freien Endbereich vorzugsweise kronenförmig ausgestaltet ist, so dass die im Führungszapfen 14 befindlichen Schmutzpartikel auch ausgeschwemmt werden können, wenn ein Anwender den Ventilkörper 12 mit dem Finger nach oben drückt und die Ausschwemmöffnung des hülsenförmigen Führungszapfens 14 verschließt.

Während der Ventilkörper 12 der in den Figuren 1 bis 4 und 7 bis 12 dargestellten Einbauelemente 1 als massiver und aus zwei Einzelteilen zusammengesetzter Bestandteil ausgestaltet ist, ist der Ventilkörper 12 des in den Figuren 5 und 6 abgebildeten Einbauelementes 1 rohrförmig ausgestaltet. Dabei ist unterhalb des mit dem Ventilsitz zusammenwirkenden Ventilschirmes an dem zuströmseitigen Endbereich des Führungszapfens 14 zumindest ein Flüssigkeitseinlass 16 vorgesehen, während die abströmseitige und zumindest bis zum Wasserauslass des Einbauelements 1 reichende Stirnöffnung des rohrförmigen Führungszapfens als Flüssigkeitsauslass dient. Durch den im Rohrinneren des Führungszapfens vorgesehenen By-Pass-Kanal 6 können somit die im Wasser mitgeführten Schmutzpartikel durch das Einbauelement 1 hindurchgeführt werden. Somit können auch große Schmutzpartikel, die durch den rohrförmigen Führungszapfen passen, aus dem Strahlregler herausbefördert werden, ohne nachfolgende Funktionseinheiten des Strahlreglers passieren zu müssen. Diese nachfolgenden Funktionseinheiten können ohne Rücksicht auf im Wasser mitgeführte Schmutzpartikel gestaltet und optimiert werden.

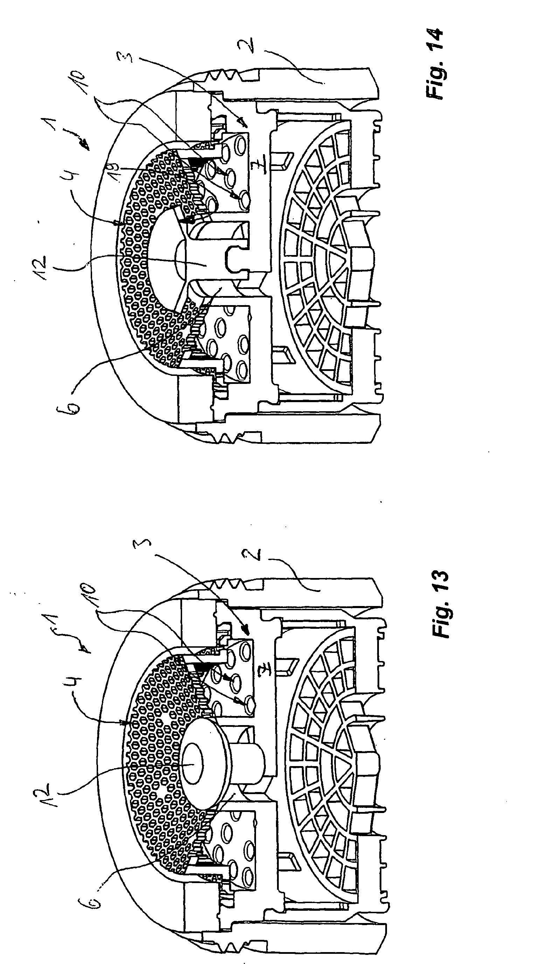

In den Figuren 13 und 14 ist ein Ausführungsbeispiel dargestellt, dessen Ventil ein aus elastischem Material hergestellten und im wesentlichen pilz- oder schirmförmige Ventilkörper 12 aufweist. Während der Schirm des in den Figuren 13 und 14 abgebildeten Ventilkörpers 12 in Offenstellung nach oben aufgestellt ist, wird der Schirm dieses elastischen ventilkörpers durch den Staudruck des zuströmenden Wassers gegen die Eigenelastizität des verwendeten Materials in die, in Figur 13 gezeigte Schließstellung, umgestülpt.

Aus einem Vergleich der Figuren 1,3,5,7,9,11,13,16,18,20,22 und 24 ist erkennbar, dass die Ventilkörper 12 in der Schließstellung des Ventils an dem die Auslassöffnung 5 begrenzenden und als Ventilsitz dienenden Randbereich des Filtersiebes 4 dicht anliegen.

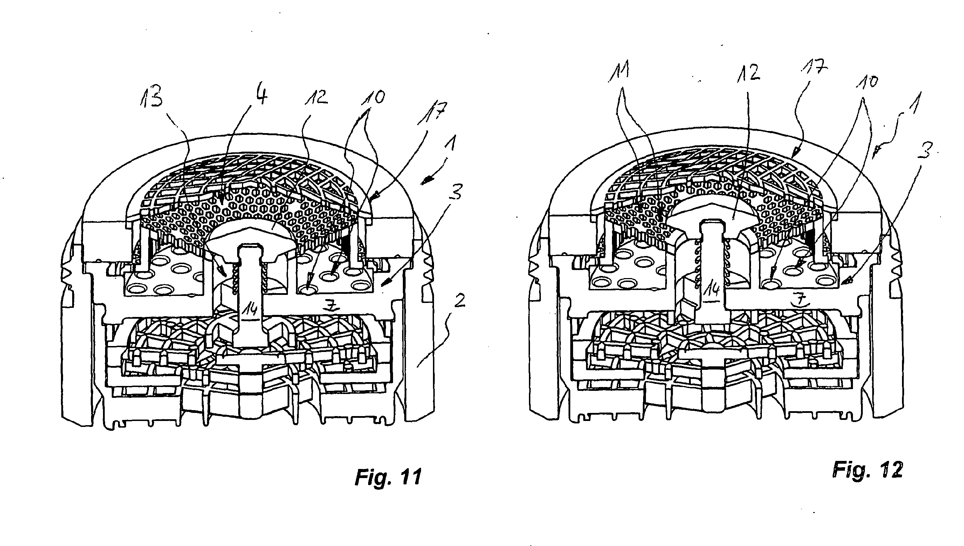

In den Figuren 11 und 12 ist angedeutet, dass dem Einbauelement 1 bei Bedarf auch ein Vorsatzsieb 17 in strömungsrichtung vorgeschaltet sein kann. Durch ein solches Vorsatzsieb 17 können auch vergleichsweise grobe Schmutzpartikel vom Einbauelement 1 ferngehalten werden.

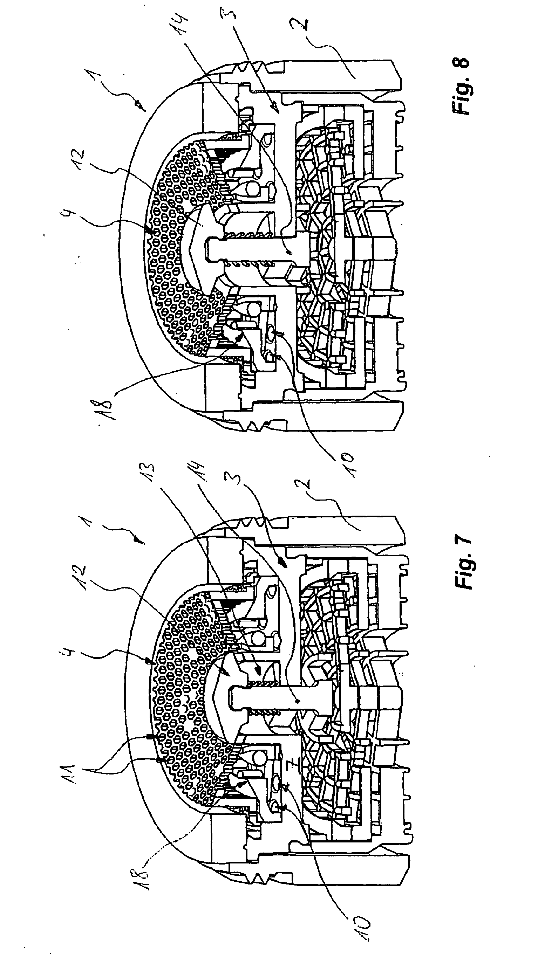

Aus den Figuren 7 und 8 wird deutlich, dass die Einbauelemente 1 zusätzlich zu oder statt einem Strahlregler 3 auch einen Durchflussmengenregler 18 als Funktionseinheit aufweisen können. In den Figuren 7 und 8 ist dieser Durchflussmengenregler 18 dem Strahlregler 3 und dessen als Lochplatte 7 ausgestalteten Strahlzerleger in Strömungsrichtung vorgeschaltet. Dabei wird auch die Funktionsweise des Durchflussmengenreglers 18 durch das vorgeschaltete Filtersieb 4 sichergestellt.

Es versteht sich, dass die in den Figuren 3 bis 6 dargestellten Strahlregler 1 mit manueller Betätigung der Reinigungsfunktion auch ohne eine Rückstellfeder 13 ausgestaltet werden können. Sind die in den Figuren 3 bis 6 dargestellten Strahlregler 1 ohne die Rückstellfeder 13 ausgestaltet, wird die Reinigungsfunktion allein durch manuelle Druckbeaufschlagung an der Handhabe 15 ausgelöst; die Reinigung erfolgt bei dem derart ausgestalteten Strahlregler 1 praktisch "on demand". Durch den Fortfall der Rückstellfeder 13 wird die kostengünstige Herstellung des Strahlreglers 1 noch zusätzlich begünstigt.

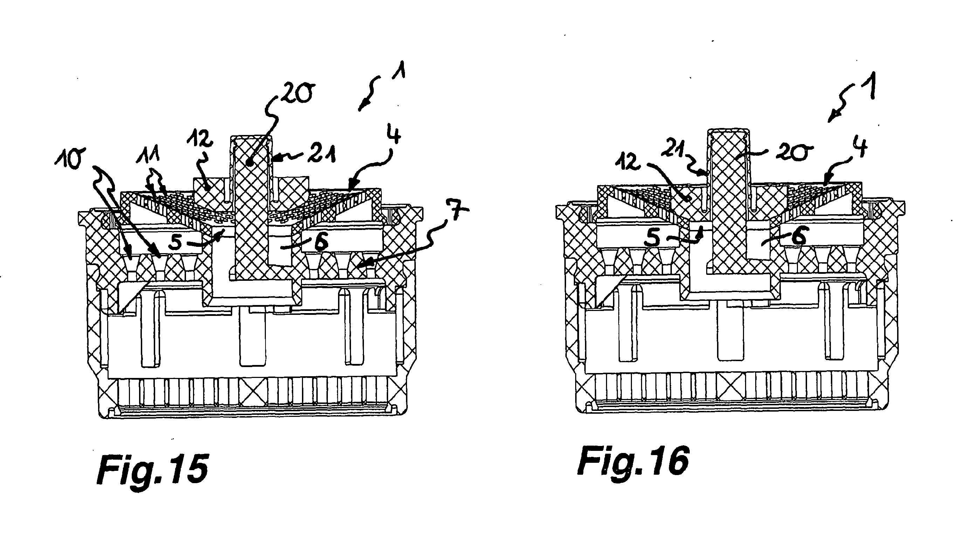

Wie aus einem Vergleich der Figuren 15 bis 26 deutlich wird, weisen die dort abgebildeten Einbauelemente 1 einen Führungszapfen 20 auf, der die Auslassöffnung 5 durchsetzt und mit seinem freien Zapfenende zuströmseitig über das Filtersieb 4 vorsteht. An diesem Führungszapfen 20 ist ein Ventilkörper 12 verschieblich geführt, der den Führungszapfen 20 ringförmig umgreift. An dem Ventilkörper 12 der in den Figuren 15 bis 26 dargestellten Einbauelemente 1 ist ein Rückstellelement 21 aus elastischem Material vorgesehen, welches einerseits mit dem Ventilkörper 12 und andererseits mit dem Führungszapfen 20 verbunden ist.

Das aus elastischem Material hergestellte Rückstellelement 21 ist kappenförmig ausgebildet. Das kappenförmige Rückstellelemente 21 übergreift den Führungszapfen 20 und ist mit seinem abströmseitigen Umfangsrandbereich derart einstückig an den Ventilkörper 12 angeformt, dass das Rückstellelement 21 an gegenüberliegenden Stirnrändern mit dem ventilkörper 12 verbunden ist, während es sich mit seinem Mittelbereich auf der zuströmseitigen Stirnseite des Führungszapfens 20 abstützt.

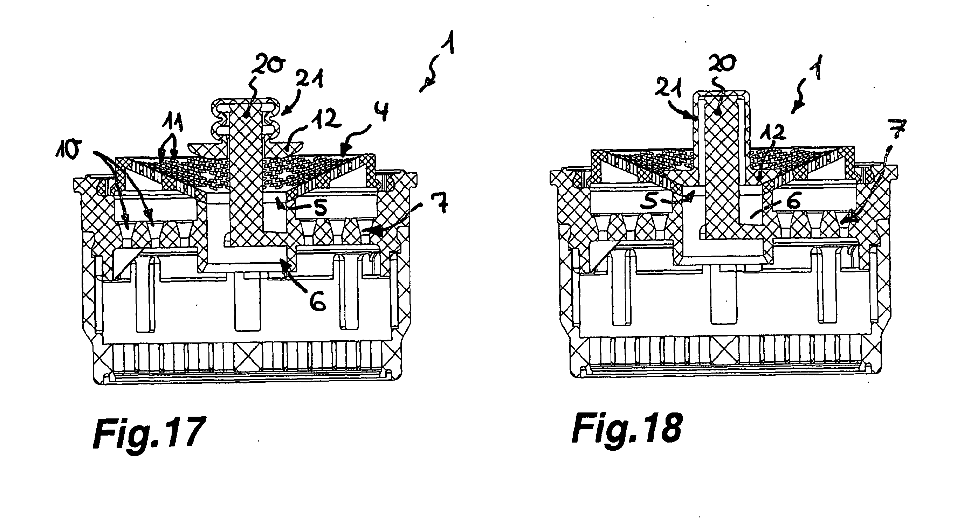

Während das Rückstellelement 21 der in den Figuren 15 bis 16, 19 bis 20 und 25 bis 26 dargestellten Einbauelemente 1 als einsaitig geschlossene Hülse ausgebildet ist, ist das ebenfalls kappenförmige Rückstellelement der in den Figuren 17 bis 18, 21 bis 22 und 23 bis 24 gezeigten Einbauelemente an seinem Kappenumfang als Federbalg ausgestaltet.

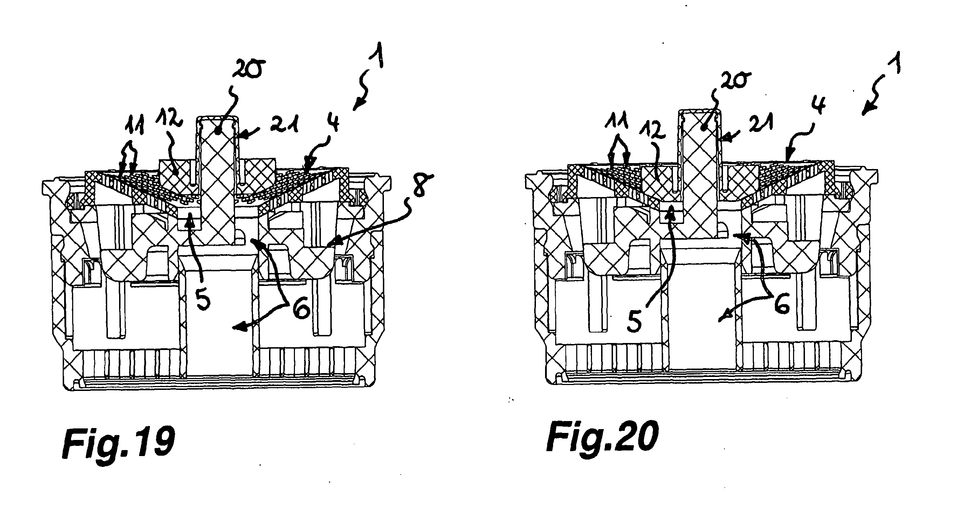

Der By-Pass-Kanal der in den Figuren 15 bis 16, 17 bis 18, 23 bis 24 und 25 bis 26 gezeigten Einbauelemente 1 hat seinen Kanalauslass auf der Anströmseite eines dem Filtersieb 4 nachfolgenden Strahlzerlegers. Demgegenüber ist der hülsenförmige By-Pass-Kanal 6 der in den Figuren 19 bis 20 und 21 bis 22 gezeigten Einbauelemente 1 derart fortgeführt, dass der Kanalauslass den Strahlzerleger und einen abströmseitigen Strömungsgleichrichter durchsetzt und auf der Abströmseite des Einbauelementes 1 angeordnet ist.

Dabei ist der Strahlzerleger der in den Figuren 15 bis 16 und 17 bis 18 abgebildeten Einbauelemente 1 als Lochplatte 7 ausgestaltet, während die in den Figuren 19 bis 20, 21 bis 22, 22 bis 23 und 23 bis 24 gezeigten Einbauelemente 1 einen Diffusor 8 als Strahlzerleger aufweisen.

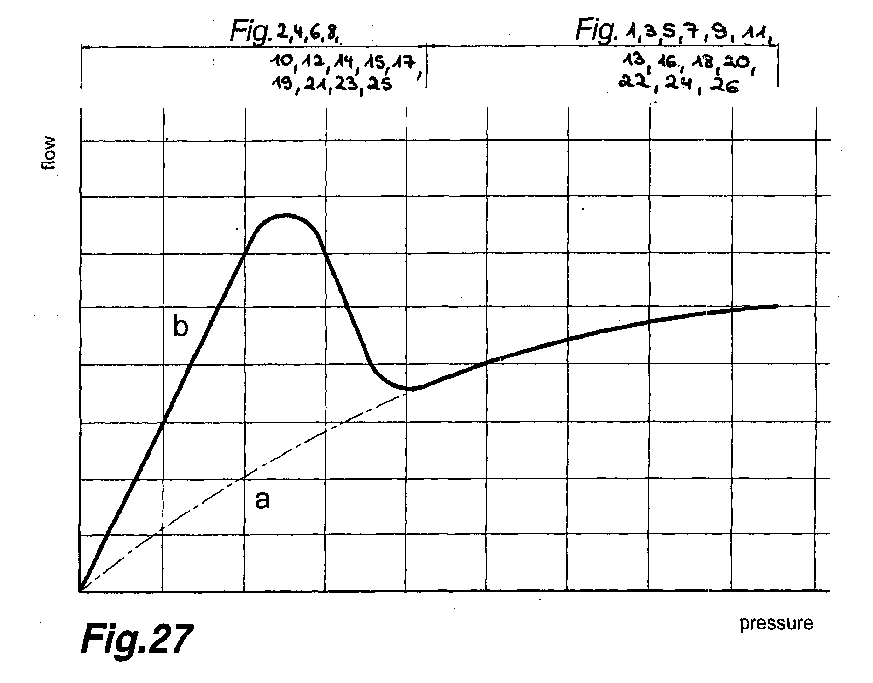

Figur 27 zeigt eine typische Durchflusskurve, die mit den Einbauelementen 1 gemäß den Figuren 1 bis 26 erreichbar ist. Die in einer strichpunktierten Linie dargestellte Kurve a zeigt das Durchflussverhalten eines im Stand der Technik verwendeten Strahlzerlegers, wohingegen die als durchgezogene Linie dargestellte Kurve b im niedrigen Druckbereich aufgrund der By-Pass-Wirkung des noch offenen Ventils einen sehr steilen Anstieg des Durchflusses darstellt, der sich dann bei zunehmendem Druck aufgrund des Verschließens des Ventilkörpers 12 reduziert und bei höherem Druck deckungsgleich mit der Kurve a wird, die das typische Durchflussverhalten eines als Strahlregler ausgebildeten Einbauelementes 1 mit in der Schließposition befindlichem Ventil zeigt.

## Patentansprüche

1. Sanitäres Einbauelement (1) mit zumindest einem By-Pass-Kanal (6), dem ein Ventil zugeordnet ist, in dessen Offenstellung der zumindest eine By-Pass-Kanal (6) zugeschaltet ist, wobei der Kanalauslass des zumindest einen By-Pass-Kanals (6) in Strömungsrichtung hinter mindestens einem flüssigkeitsführenden Bestandteil (7, 8) wenigstens einer im Einbauelement befindlichen Funktionseinheit angeordnet ist, **dadurch gekennzeichnet, dass** das Einbauelement (1) ein Filtersieb (4) mit wenigstens einer Auslassöffnung (5) hat, welche Auslassöffnung (5) einen im Vergleich zu den Filteröffnungen (11) des Filtersiebes (4) vergrößerten lichten Öffnungsquerschnitt aufweist, dass die wenigstens eine Auslassöffnung (5) in den zumindest einen By-Pass-Kanal (6) mündet, und dass die Auslassöffnung (5) in Strömungsrichtung vor dem mindestens einen flüssigkeitsführenden Bestandteil (7,8) der wenigstens einen im Einbauelement befindlichen Funktionseinheit angeordnet ist.

2. Einbauelement nach Anspruch 1, **dadurch gekennzeichnet, dass** das wenigstens eine Ventil von seiner Offenstellung unter dem Staudruck des zuströmenden Wassers in seine Schließstellung bewegbar ist.

3. Einbauelemente nach Anspruch 1 oder 2, **dadurch gekennzeichnet, dass** das Einbauelement (1) selbstreinigend ausgestaltet ist und dass dazu das wenigstens eine Ventil unter dem Staudruck des zuströmenden Wassers gegen eine Rückstellkraft in seine Schließstellung bewegbar ist.

4. Einbauelemente nach einem der Ansprüche 1 bis 3, **dadurch gekennzeichnet, dass** das Einbauelement (1) einen Strahlregler (3) als Funktionseinheit aufweist und dass ein Strahlzerleger als zumindest eines der flüssigkeits- führenden Bestandteile vorgesehen ist.

5. Einbauelement nach Anspruch 4, **dadurch gekennzeichnet, dass** der Strahlzerleger als Lochplatte (7) oder als Diffusor (8) ausgestaltet ist.

6. Einbauelement nach einem der Ansprüche 1 bis 5, **dadurch gekennzeichnet, dass** zumindest ein Teil der Filteröffnungen (11) des Filtersiebs (4) einen im Vergleich zu den Durchtrittsöffnungen des zumindest einen flüssigkeitsführenden Bestandteils (7, 8) gleich großen oder kleineren lichten Durchflussquerschnitt aufweisen.

7. Einbauelement nach einem der Ansprüche 1 bis 6, **dadurch gekennzeichnet, dass** die zumindest eine Funktionseinheit (3, 4) den Filteröffnungen (11) des Filtersiebes (4) in Strömungsrichtung nachgeschaltet sind.

8. Einbauelement nach einem der Ansprüche 1 bis 7, **dadurch gekennzeichnet, dass** das zumindest ein Ventil einen Ventilkörper (12) hat, der im Einbauelement (1) genen eine Rückstellkraft verschieblich geführt ist.

9. Einbauelement nach Anspruch 8, **dadurch gekennzeichnet, dass** ein durch das Einbauelement (1) hindurchgeführter Teilbereich des Ventilkörpers (12) zumindest bis zum Wasserauslass des Einbauelements (1) vorsteht und als Handhabe (15) zum manuellen Betätigen des Ventils ausgestaltet ist.

10. Einbauelement nach Anspruch 8 oder 9, **dadurch gekennzeichnet, dass** der Ventilkörper (12) pilz- oder tellerförmig ausgestaltet ist.

11. Einbauelement nach einem der Ansprüche 8 bis 10, **dadurch gekennzeichnet, dass** der Ventilkörper (12) einen im Einbauelement (1) verschieblich geführten Führungszapfen (14) hat.

12. Einbauelement nach Anspruch 11, **dadurch gekennzeichnet, dass** der Führungszapfen (14) rohrförmig ausgestaltet ist, dass das Rohrinnere des Führungszapfens (14) als By-Pass-Kanal (6) ausgestaltet ist, und dass im zuströmseitigen Endbereich des Führungszapfens (14) zumindest ein Flüssigkeitseinlass und im abströmseitigen Endbereich des Führungszapfens (14) wenigstens ein Flüssigkeitsauslass vorgesehen ist.

13. Einbauelement nach Anspruch 12, **dadurch gekennzeichnet, dass** die abströmseitige und vorzugsweise zumindest bis zum Wasserauslass des Einbauelements (1) vorstehende Stirnöffnung des Führungszapfens (14) als Flüssigkeitsauslass ausgestaltet ist.

14. Einbauelement nach einem der Ansprüche 11 bis 13, **dadurch gekennzeichnet, dass** der abströmseitige Endbereich des Führungszapfens (14) kronenförmig ausgestaltet ist.

15. Einbauelement nach Anspruch 8, **dadurch gekennzeichnet, dass** der Ventilkörper (12) zumindest in einem schirmförmigen Teilbereich elastisch ausgestaltet ist und außenumfangsseitig eine umlaufende Dichtlippe hat, und dass der schirmförmige Teilbereich von einer Offenstellung gegen die Elastizität des elastischen Materials in eine Schließstellung bewegbar ist.

16. Einbauelement nach einem der Ansprüche 1 bis 15, **dadurch**
**gekennzeichnet, dass** der die Auslassöffnung (5) umgrenzende Randbereich des Filtersiebes (4) als mit dem
Ventilkörper (12) zusammenwirkender Ventilsitz ausgestaltet ist.

17. Einbauelement nach einem der Ansprüche 1 bis 16, **dadurch gekennzeichnet, dass** dem Einbauelement (1) in Strömungsrichtung zumindest ein Vorsatzsieb (17) vorgeschaltet ist.

18. Einbauelement nach einem der Ansprüche 3 bis 17, **dadurch gekennzeichnet, dass** das Einbauelement (1) den Strahlregler (3) sowie einen vorzugsweise vorgeschalteten Durchflussmengenregler (18) als Funktionseinheiten aufweist.

19. Einbauelement nach einem der Ansprüche 1 bis 18, **dadurch gekennzeichnet, dass** das Filtersieb (4) trichterförmig ausgestaltet ist, und dass die Trichteröffnung des Filtersiebes (4) als Auslassöffnung (5) dient.

20. Einbauelement nach einem der Ansprüche 17 bis 19, **dadurch gekennzeichnet, dass** das trichterförmige Filtersieb (4) eine im wesentlichen konvexe oder konkave Trichterform hat.

21. Einbauelement nach einem der Ansprüche 18 bis 20, **dadurch gekennzeichnet, dass** der Ventilkörper (12) an einem über das Filtersieb (4) vorstehenden Führungszapfen (20) verschieblich geführt ist, und dass zumindest ein Rückstellelement (21) aus elastischem Material vorgesehen ist, welches einerseits mit dem Ventilkörper (12) und andererseits mit dem Führungszapfen (20) verbunden ist.

22. Einbauelement nach Anspruch 21, **dadurch gekennzeichnet, dass** der Ventilkörper (12) den Führungszapfen (20) ringförmig umgreift.

23. Einbauelement nach Anspruch 21 oder 22, **dadurch gekennzeichnet, dass** das Rückstellelement (21) mit gegenüberliegenden Stirnrändern am Ventilkörper (12) einstückig angeformt ist, und dass das Rückstellelement (21) mit seinem Mittelbereich auf der zuströmseitigen Stirnseite des Führungszapfens (20) abgestützt ist.

24. Einbauelement nach einem der Ansprüche 21 bis 23, **dadurch gekennzeichnet, dass** das Rückstellelement (21) den Führungszapfen (20) kappenförmig übergreift, und dass das Rückstellelement (21) mit seinem abströmseitigen Umfangsrandbereich einstückig an den Ventilkörper (12) angeformt ist.

25. Einbauelement nach Anspruch 24, **dadurch gekennzeichnet, dass** der Ventilkörper (12) im wesentlichen durch den elastisch nachgiebigen Kappenumfang des Rückstellelementes (21) am Führungszapfen (20) verschieblich geführt ist.

26. Einbauelement nach Anspruch 24 oder 25, **dadurch gekennzeichnet, dass** das Rückstellelement (21) einen als Federbalg ausgestalteten Kappenumfang hat.

## Claims

1. Sanitary insert element (1) having at least one bypass duct (6) which is assigned a valve, in the open position of which the at least one bypass duct (6) is activated, wherein the duct outlet of the at least one bypass duct (6) is arranged downstream, as viewed in a flow direction, of at least one liquid-conducting component (7, 8) of at least one functional unit situated in the insert element, **characterized in that** the insert element (1) has a filter screen (4) with at least one outlet opening (5), which outlet opening (5) has a clear opening cross section which is enlarged in relation to the filter openings (11) of the filter screen (4), **in that** the at least one outlet opening (5) issues into the at least one bypass duct (6), and **in that** the outlet opening (5) is arranged upstream, as viewed in the flow direction, of the at least one liquid-conducting component (7, 8) of the at least one functional unit situated in the insert element.

2. Insert element according to Claim 1, **characterized in that** the at least one valve can be moved from its open position into its closed position under the dynamic pressure of the inflowing water.

3. Insert element according to Claim 1 or 2, **characterized in that** the insert element (1) is of self-cleaning design and **in that**, for this purpose, the at least one valve can be moved into its closed position under the dynamic pressure of the inflowing water counter to a restoring force.

4. Insert element according to one of Claims 1 to 3, **characterized in that** the insert element (1) has a jet regulator (3) as functional unit, and **in that** a jet splitter is provided as at least one of the liquid-conducting components.

5. Insert element according to Claim 4, **characterized in that** the jet splitter is in the form of a perforated plate (7) or a diffuser (8).

6. Insert element according to one of Claims 1 to 5, **characterized in that** at least some of the filter openings (11) of the filter screen (4) have a clear throughflow cross section which is of the same size as or smaller than the passage openings of the at least one liquid-conducting component (7, 8) .

7. Insert element according to one of Claims 1 to 6, **characterized in that** the at least one functional unit (3, 4) is positioned downstream, as viewed in the flow direction, of the filter openings (11) of the filter screen (4).

8. Insert element according to one of Claims 1 to 7, **characterized in that** the at least one valve has a valve body (12) which is guided displaceably in the insert element (1) counter to a restoring force.

9. Insert element according to Claim 8, **characterized in that** a sub-region, which is guided through the insert element (1), of the valve body (12) projects at least as far as the water outlet of the insert element (1) and is designed as a handle (15) for the manual actuation of the valve.

10. Insert element according to Claim 8 or 9, **characterized in that** the valve body (12) is of mushroom-shaped or plate-shaped form.

11. Insert element according to one of Claims 8 to 10, **characterized in that** the valve body (12) has a guide peg (14) guided displaceably in the insert element (1).

12. Insert element according to Claim 11, **characterized in that** the guide peg (14) is of tubular form, **in that** the tube interior of the guide peg (14) is in the form of a bypass duct (6), and **in that** at least one liquid inlet is provided in the inflow-side end region of the guide peg (14) and at least one liquid outlet is provided in the outflow-side end region of the guide peg (14).

13. Insert element according to Claim 12, **characterized in that** the outflow-side face opening, which projects preferably at least as far as the water outlet of the insert element (1), of the guide peg (14) is in the form of a liquid outlet.

14. Insert element according to one of Claims 11 to 13, **characterized in that** the outflow-side end region of the guide peg (14) is of crown-shaped form.

15. Insert element according to Claim 8, **characterized in that** the valve body (12), at least in an umbrella-shaped sub-region, is of elastic form and has an encircling sealing lip on the outer circumference, and **in that** the umbrella-shaped sub-region can be moved from an open position into a closed position counter to the elasticity of the elastic material.

16. Insert element according to one of Claims 1 to 15, **characterized in that** the edge region, which borders the outlet opening (5), of the filter screen (4) is in the form of a valve seat that interacts with the valve body (12).

17. Insert element according to one of Claims 1 to 16, **characterized in that** at least one upstream screen (17) is positioned upstream, as viewed in the flow direction, of the insert element (1).

18. Insert element according to one of Claims 3 to 17, **characterized in that** the insert element (1) has the jet regulator (3) and a throughflow rate regulator (18), which is preferably positioned upstream, as functional units.

19. Insert element according to one of Claims 1 to 18, **characterized in that** the filter screen (4) is of funnel-shaped form, and **in that** the funnel opening of the filter screen (4) serves as outlet opening (5).

20. Insert element according to one of Claims 17 to 19, **characterized in that** the funnel-shaped filter screen (4) has a substantially convex or concave funnel shape.

21. Insert element according to one of Claims 18 to 20, **characterized in that** the valve body (12) is guided displaceably on a guide peg (20) that projects beyond the filter screen (4), and **in that** at least one restoring element (21) composed of elastic material is provided, which restoring element is connected at one side to the valve body (12) and at the other side to the guide peg (20).

22. Insert element according to Claim 21, **characterized in that** the valve body (12) engages annularly around the guide peg (20).

23. Insert element according to Claim 21 or 22, **characterized in that** the restoring element (21) is, by way of opposite face edges, formed integrally on the valve body (12), and **in that** the restoring element (21) is supported by way of its central region on the inflow-side face side of the guide peg (20).

24. Insert element according to one of Claims 21 to 23, **characterized in that** the restoring element (21) engages over the guide peg (20) in the manner of a cap, and **in that** the restoring element (21) is, by way of its outflow-side circumferential edge region, formed integrally on the valve body (12).

25. Insert element according to Claim 24, **characterized in that** the valve body (12) is guided displaceably on the guide peg (20) substantially by the elastically flexible cap circumference of the restoring element (21).

26. Insert element according to Claim 24 or 25, **characterized in that** the restoring element (21) has a cap circumference in the form of a spring bellows.

## Revendications

1. Elément sanitaire intégré (1) comportant au moins un canal de dérivation (6) auquel est affectée une soupape dans la position ouverte de laquelle ledit canal de dérivation (6) à présence minimale est mis en circuit, la sortie dudit canal de dérivation (6) à présence minimale étant située, dans la direction de l'écoulement, derrière au moins un composant (7, 8) de guidage de liquide d'au moins une unité fonctionnelle logée dans ledit élément intégré, **caractérisé par le fait que** ledit élément intégré (1) est pourvu d'un crible de filtration (4) percé d'au moins une ouverture de sortie (5), laquelle ouverture de sortie (5) présente une section transversale intérieure accrue comparativement aux orifices de filtration (11) dudit crible de filtration (4) ; **par le fait que** l'ouverture de sortie (5), à présence minimale, débouche dans le canal de dérivation (6) à présence minimale ; et **par le fait que** ladite ouverture de sortie (5) est située, dans la direction de l'écoulement, devant le composant (7, 8) de guidage de liquide, à présence minimale, de l'unité fonctionnelle à présence minimale logée dans ledit élément intégré.

2. Elément intégré selon la revendication 1, **caractérisé par le fait que** la soupape, à présence minimale, peut être mue de sa position ouverte à sa position fermée sous l'action de la pression dynamique de l'eau d'afflux.

3. Elément intégré selon la revendication 1 ou 2, **caractérisé par le fait que** ledit élément intégré (1) est de réalisation autonettoyante ; et **par le fait que** la soupape à présence minimale peut, à cet effet, être mue à sa position fermée sous l'action de la pression dynamique de l'eau d'afflux, en opposition à une force de rappel.

4. Elément intégré selon l'une des revendications 1 à 3, **caractérisé par le fait que** ledit élément intégré (1) comporte un régulateur de jets (3) en tant qu'unité fonctionnelle ; et **par le fait qu'**un brise-jets est prévu pour constituer au moins l'un des composants de guidage de liquide.

5. Elément intégré selon la revendication 4, **caractérisé par le fait que** le brise-jets est réalisé sous la forme d'un disque perforé (7), ou d'un diffuseur (8).

6. Elément intégré selon l'une des revendications 1 à 5, **caractérisé par le fait qu'**au moins une partie des orifices de filtration (11) du crible de filtration (4) présente une section transversale intérieure d'écoulement égale ou inférieure comparativement aux orifices de passage du composant (7, 8) de guidage de liquide, à présence minimale.

7. Elément intégré selon l'une des revendications 1 à 6, **caractérisé par le fait que** l'unité fonctionnelle (3, 4), à présence minimale, est installée en aval des orifices de filtration (11) du crible de filtration (4) dans la direction de l'écoulement.

8. Elément intégré selon l'une des revendications 1 à 7, **caractérisé par le fait que** la soupape, à présence minimale, est munie d'un corps obturateur (12) guidé à coulissement dans ledit élément intégré (1), en opposition à une force de rappel.

9. Elément intégré selon la revendication 8, **caractérisé par le fait qu'**une région partielle du corps obturateur (12), parcourant ledit élément intégré (1) de part en part, dépasse au moins jusqu'à la sortie d'eau dudit élément intégré (1) et est conçue comme une poignée (15), en vue de l'actionnement manuel de la soupape.

10. Elément intégré selon la revendication 8 ou 9, **caractérisé par le fait que** le corps obturateur (12) est de configuration fongiforme ou discoïdale.

11. Elément intégré selon l'une des revendications 8 à 10, **caractérisé par le fait que** le corps obturateur (12) est doté d'une broche de guidage (14) guidée à coulissement dans ledit élément intégré (1).

12. Elément intégré selon la revendication 11, **caractérisé par le fait que** la broche de guidage (14) est de réalisation tubulaire ; **par le fait que** l'espace intérieur du tube de ladite broche de guidage (14) est conçu en tant que canal de dérivation (6) ; et **par le fait qu'**au moins une entrée de liquide est prévue dans la région extrême de la broche de guidage (14) qui est située côté afflux, au moins une sortie de liquide étant prévue dans la région extrême de ladite broche de guidage (14) qui est située côté décharge.

13. Elément intégré selon la revendication 12, **caractérisé par le fait que** l'ouverture frontale de la broche de guidage (14), située côté décharge et dépassant, de préférence, au moins jusqu'à la sortie d'eau dudit élément intégré (1), est conçue en tant que sortie de liquide.

14. Elément intégré selon l'une des revendications 11 à 13, **caractérisé par le fait que** la région extrême de la broche de guidage (14), qui est située côté décharge, est de configuration coroniforme.

15. Elément intégré selon la revendication 8, **caractérisé par le fait que** le corps obturateur (12) est de réalisation élastique, au moins dans une région partielle en forme de parapluie, et est pourvu d'une lèvre périphérique d'étanchement du côté de son pourtour extérieur ; et **par le fait que** ladite région partielle, en forme de parapluie, peut être mue d'une position ouverte à une position fermée en s'opposant à l'élasticité du matériau élastique.

16. Elément intégré selon l'une des revendications 1 à 15, **caractérisé par le fait que** la région marginale du crible de filtration (4), qui délimite la périphérie de l'ouverture de sortie (5), est réalisée sous la forme d'un siège d'obturation coopérant avec le corps obturateur (12).

17. Elément intégré selon l'une des revendications 1 à 16, **caractérisé par le fait qu'**au moins un embout de criblage (17) est installé en amont dudit élément intégré (1) dans la direction de l'écoulement.

18. Elément intégré selon l'une des revendications 3 à 17, **caractérisé par le fait que** ledit élément intégré (1) comprend, en tant qu'unités fonctionnelles, le régulateur de jets (3), ainsi qu'un régulateur de débit (18) de préférence installé en amont.

19. Elément intégré selon l'une des revendications 1 à 18, **caractérisé par le fait que** le crible de filtration (4) est de configuration infundibuliforme ; et **par le fait que** l'ouverture de l'entonnoir dudit crible de filtration (4) remplit une fonction d'ouverture de sortie (5).

20. Elément intégré selon l'une des revendications 17 à 19, **caractérisé par le fait que** le crible infundibuliforme de filtration (4) revêt la forme d'un entonnoir substantiellement convexe ou concave.

21. Elément intégré selon l'une des revendications 18 à 20, **caractérisé par le fait que** le corps obturateur (12) est guidé, à coulissement, sur un tenon de guidage (20) faisant saillie au-delà du crible de filtration (4) ; et **par le fait qu'**il est prévu au moins un élément de rappel (21) en un matériau élastique qui est relié, d'une part, audit corps obturateur (12) et, d'autre part, audit tenon de guidage (20).

22. Elément intégré selon la revendication 21, **caractérisé par le fait que** le corps obturateur (12) ceinture annulairement le tenon de guidage (20).

23. Elément intégré selon la revendication 21 ou 22, **caractérisé par le fait que** l'élément de rappel (21) est façonné d'un seul tenant, avec le corps obturateur (12), par des bords frontaux tournés à l'opposé ; et **par le fait que** ledit élément de rappel (21) est en appui, par sa région médiane, sur la face extrême du tenon de guidage (20) qui est située côté afflux.

24. Elément intégré selon l'une des revendications 21 à 23, **caractérisé par le fait que** l'élément de rappel (21) coiffe le tenon de guidage (20) sous la forme d'un capuchon ; et **par le fait que** ledit élément de rappel (21) est façonné d'un seul tenant, avec le corps obturateur (12), par la région marginale de son pourtour qui est située côté décharge.

25. Elément intégré selon la revendication 24, **caractérisé par le fait que** le corps obturateur (12) est guidé à coulissement, sur le tenon de guidage (20), pour l'essentiel par le pourtour du capuchon formé par l'élément de rappel (21) et doué de souplesse élastique.

26. Elément intégré selon la revendication 24 ou 25, **caractérisé par le fait que** l'élément de rappel (21) possède un pourtour formant capuchon configuré en un soufflet.
